Europäisches Patentamt

(19) European Patent Office

Office européen des brevets

(11) Numéro de publication: **0 207 958**

**B1**

(12) **FASCICULE DE BREVET EUROPÉEN**

(45) Date de publication du fascicule du brevet:
08.03.89

(51) Int. Cl.⁴: **F 16 F 13/00,** B 60 K 5/12

(21) Numéro de dépôt: **86900167.7**

(22) Date de dépôt: **24.12.85**

(86) Numéro de dépôt international:
**PCT/FR 85/00373**

(87) Numéro de publication internationale:
**WO 86/03813 (03.07.86 Gazette 86/14)**

(54) **SUPPORT ANTIVIBRATOIRE HYDRAULIQUE.**

(30) Priorité: **24.12.84 FR 8419790**

(43) Date de publication de la demande:
**14.01.87 Bulletin 87/3**

(45) Mention de la délivrance du brevet:
**08.03.89 Bulletin 89/10**

(84) Etats contractants désignés:
**BE DE GB IT NL SE**

(56) Documents cité:
**EP-A-0 068 395**
**EP-A-0 098 331**
**FR-A-2 560 326**
**GB-A-2 041 485**
**GB-A-2 132 311**

**Patent Abstracts of Japan, Vol.7, No.165 (M-230)(1310) 20 July 1983**

(73) Titulaire: **HUTCHINSON, 2 rue Balzac, F-75008 Paris (FR)**

(72) Inventeur: **BODIN, François, 119, rue d'Arsonval, F-19110 Bort Les Orgues (FR)**

(74) Mandataire: **Behaghel, Pierre, CABINET PLASSERAUD 84 rue d'Amsterdam, F-75009 Paris (FR)**

EP 0 207 958 B1

## Description

L'invention concerne les dispositifs antivibratoires destinés à être interposés aux fins de support et d'amortissement entre deux éléments rigides, l'amortissement faisant intervenir le refoulement d'un liquide à travers un passage étranglé, et les déplacements relatifs à amortir des deux éléments rigides comprenant d'une part des oscillations de relativement grande amplitude (c'est-à-dire supérieure au mm) à fréquence relativement basse (c'est-à-dire inférieure à 20 Hz) et d'autre part des vibrations de relativement faible amplitude (c'est-à-dire inférieure à 0,5 mm) à fréquence relativement élevée (c'est-à-dire supérieure à 20 Hz).

A titre d'exemple non limitatif, on indique que de tels supports peuvent être montés entre un châssis de véhicule et le moteur de ce véhicule, les oscillations relativement amples à amortir étant celles créées par les irrégularités et variations de déclivité du sol lors de la circulation du véhicule sur ce sol et les vibrations à amortir étant celles dues au fonctionnement du moteur.

L'invention concerne plus particulièrement, parmi les supports du genre en question, ceux qui sont constitués par un boîtier étanche interposé entre les deux éléments rigides, boîtier comportant deux pièces rigides solidarisables respectivement avec les deux éléments rigides, une paroi élastique annulaire de support reliant de façon étanche l'une des deux pièces rigides à une armature annulaire rigide faisant partie de la seconde pièce, une membrane flexible portée de manière étanche par l'armature annulaire, une cloison déformable également portée de manière étanche par l'armature annulaire entre la paroi de support et la membrane flexible et divisant l'intérieur de l'enceinte délimitée par cette paroi et par cette membrane en deux chambres, savoir une chambre de travail du côté de la paroi et une chambre de compensation du côté de la membrane, ces deux chambres communiquant entre elles par le passage étranglé ci-dessus, des moyens pour limiter à une amplitude faible, c-est-à-dire inférieure à 1 mm, les déformations de la cloison selon la direction axiale perpendiculaire à son plan moyen, et une masse liquide remplissant les deux chambres ainsi que le passage étranglé.

Avec un tel support, une vibration de fréquence élevée et de faible amplitude exercée entre les deux éléments rigides engendre des déplacements relatifs correspondants des deux pièces rigides, lesquels sont transmis à la cloison déformable par le liquide contenu dans la chambre de travail et se traduisent par une succession rapide de déformations alternatives de cette cloison perpendiculairement à elle-même, d'amplitude inférieure à la valeur maximum possible: les dimensions de la cloison sont choisies suffisantes pour que celle-ci puisse ainsi absorber les déplacements signalés sans que le liquide soit refoulé à travers le passage étranglé selon des sens opposés en synchronisme avec la vibration.

Au contraire, pour les oscillations d'amplitude plus élevée et de fréquence plus basse, l'amplitude des déformations correspondantes de la cloison atteint sa valeur maximum possible et le liquide est alors refoulé à travers le passage étranglé, ce qui assure l'amortissement hydraulique de ce liquide par sa mise en résonance dans ce passage, tout au moins pour certaines valeurs de ladite fréquence liées aux cotes dudit passage.

L'invention concerne plus particulièrement encore, parmi les supports du genre en question, ceux pour lesquels le passage étranglé est un canal qui délimite une masse liquide assimilable à une colonne de diamètre et de longueur relativement grandes, ce canal étant évidé dans l'armature annulaire du support et s'étendant selon un arc de cercle compris entre 45 et 350° autour de la cloison déformable, les deux extrémités du canal étant terminées par des raccords qui débouchent respectivement dans les deux chambres.

Dans les modes de réalisation connus desdits supports (voir par exemple de document FR-A-2 560 326), le canal en question est unique de sorte que le rapport R entre sa longueur et son diamètre, rapport généralement compris entre 2 et 100, est déterminé une fois pour toutes.

Or l'expérience montre que la fréquence de résonance F de la colonne de liquide contenue dans un tel canal est liée audit rapport ainsi que l'amplitude A des oscillations à amortir.

On ne peut donc amortir correctement, avec les supports connus mentionnés, qu'un phénomène oscillatoire bien déterminé, correspondant à une fréquence et à une amplitude bien déterminées.

C'est ainsi que, par exemple, si la fréquence $F_1$ choisie pour définir le rapport R est celle, dite de hachis, de l'ordre de 10 Hz, qui correspond aux trépidations les plus désagréables transmises aux sièges des usagers lors du roulement du véhicule concerné, seules les oscillations correspondant à cette fréquence $F_1$ et à des amplitudes $A_1$ bien déterminées, par exemple supérieures à un seuil de l'ordre de 0,3 mm, seront amorties dans les conditions optimales.

En d'autres termes, les supports considérés ne permettent pas d'amortir au mieux les oscillations correspondant à la fréquence $F_1$ mais à des amplitudes autres que $A_1$, par exemple de l'ordre de 0,1 mm et/ou aux mêmes amplitudes $A_1$, mais à d'autres fréquences que $F_1$, par exemple à une fréquence de l'ordre de 25 Hz, comme c'est le cas pour les vibrations émises au ralenti par certains moteurs Diesel.

Pour élargir la capacité d'amortissement des supports considérés en étendant cette capacité à un nombre plus élevé de fréquences et/ou d'amplitudes d'oscillation, il a déjà été proposé de prévoir dans ces supports au moins un second passage étranglé propre à établir une communication entre les deux chambres.

Dans les modes de réalisation connus de ce perfectionnement, la cloison centrale séparant les deux chambres est rigide et fixe, les deux passages étranglés sont montés en parallèle et l'un au moins de ces deux passages est évidé dans ladite cloison rigide (voir par exemple le document JP-A-58 72741).

L'invention a pour but de proposer pour le perfectionnement considéré une construction plus simple applicable même au cas où la cloison centrale du support n'est pas rigide et fixe.

A cet effet, les supports du genre en question selon l'invention sont essentiellement caractérisés en ce que le second passage étranglé est constitué par au moins un petit trou reliant l'une des deux chambres à un point du premier passage.

Dans des modes de réalisation préférés, on a recours en outre à l'une et/ou à l'autre des dispositions suivantes:

- le point ci-dessus du premier passage se trouve au voisinage de l'extrémité, de celui-ci, raccordée à l'autre chambre,

- le second passage comprend deux trous du genre ci-dessus reliant respectivement les deux chambres à deux points, distincts ou confondus, du premier passage,

- chacun des trous constitutifs d'un second passage est orienté parallèlement à l'axe de l'armature annulaire.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, montre en coupe axiale schématique un support hydraulique antivibratoire établi selon l'invention.

Les figures 2 et 3 sont des coupes développées de la première colonne comprise par un tel support, coupe faisant apparaître les emplacements des secondes colonnes établies selon respectivement deux variantes différentes de l'invention.

Le support considéré est destiné à être interposé verticalement entre un organe porteur rigide qui sera supposé dans la suite être un châssis de véhicule et un organe supporté rigide qui sera supposé dans la suite être un moteur à combustion interne.

Ce support se présente sous la forme générale d'un boîtier étanche comportant, d'une façon connue en soi:

- une armature annulaire 1 raccordée inférieurement à un bac perforé $1_1$ lui-même solidaire d'un boulon central $1_2$ permettant l'assemblage sur le châssis du véhicule,

- un chapeau rigide 2 se présentant ici sous la forme d'un boulon dont la portion filetée s'étend vers le haut, boulon solidarisable avec le carter du moteur,

- une paroi tronconique épaisse et étanche 3 en caoutchouc ou matériau élastique analogue adhérée respectivement sur l'armature 1 et sur le chapeau 2 et propre à résister élastiquement à la compression axiale et à la flexion transversale,

- et une membrane flexible étanche 4 dont le pourtour est fixé de façon étanche sur l'armature annulaire 1.

Une cloison déformable 5 divise l'intérieur du boîtier ainsi défini en deux chambres A et B toutes les deux remplies d'un liquide amortisseur, savoir une chambre A, de travail, disposée du côté de la paroi 3 et une chambre B, de compensation, disposée du côté de la membrane 4.

La cloison 5 est constituée par une feuille élastique $5_1$ montée sur un siège annulaire $5_2$ qui est solidarisé avec l'armature annulaire 1.

Les débattements de cette membrane sont limités de toute manière désirable, par exemple par incorporation d'une toile métallique.

La communication du liquide entre les deux chambres A et B se fait à travers un passage étranglé 6 constamment ouvert.

Ce passage est constitué par un canal évidé à l'intérieur du siège $5_2$ et s'étendant selon un arc de cercle compris entre 45 et 350°, canal dont les deux extrémités débouchent respectivement dans les deux chambres A et B par deux raccords $6_1$ et $6_2$.

Enfin l'on prévoit avantageusement dans la chambre A une plaque perforée 7 s'étendant parallèlement à la membrane $5_1$, à une petite distance de celle-ci et prenant appui à sa périphérie sur le siège $5_2$.

Comme indiqué ci-dessus, le support qui vient d'être décrit permet d'amortir:

- d'une part, des oscillations à fréquence relativement basse $F_1$ et à relativement grande amplitude $A_1$,

- d'autre part, des vibrations à fréquence relativement haute $F_2$ et à relativement petite amplitude $A_2$.

La fréquence $F_1$ et l'amplitude $A_1$ sont essentiellement liées au rapport $R_1$ entre la longueur et le diamètre de la colonne de liquide $C_1$ contenue dans le passage 6.

Pour permettre un excellent amortissement, par l'effet "colonne" d'oscillations ayant une fréquence ($F_1'$, $F_1''$..) et/ou une amplitude ($A_1'$, $A_1''$..) distinctes de celles indiquées ci-dessus selon l'invention, on prévoit au moins une seconde colonne ($C_1'$, $C_1''$..) reliant l'une des chambres à un point de la première colonne, le rapport longueur/diamètre de cette seconde colonne étant déterminé en fonction des nouveaux paramètres (fréquence et/ou amplitude) considérés.

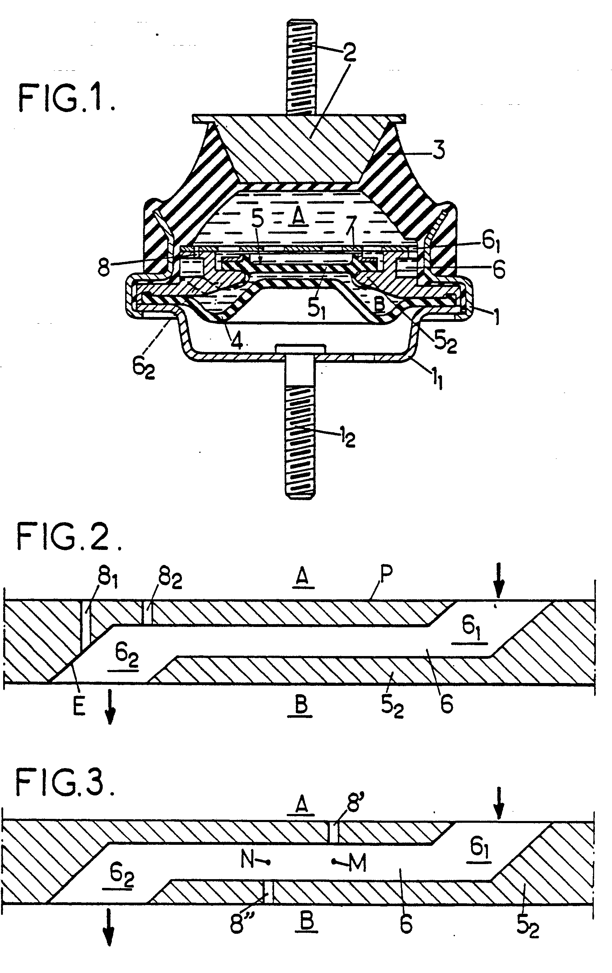

Dans le mode de réalisation illustré sur la figure 1, cette seconde colonne est unique et est définie par un petit trou 8 reliant la chambre A à la zone $6_2$, de la première colonne, qui débouche dans la chambre B.

Le diamètre de ce trou est généralement compris entre 0.5 et 6 mm et sa longueur est généralement comprise entre 1 et 10 mm.

L'expérience a montré qu'avec une colonne principale 6 présentant une section de l'ordre de 35 mm² et une longueur de l'ordre de 60 mm, la présence d'un trou circulaire 8 à l'endroit indiqué ci-dessus, trou présentant un diamètre de 4 mm et une longueur de 4 mm, avait pour effet:

- d'une part, de réduire considérablement la rigidité du support pour les fréquences supérieures à 30 Hz et en particulier pour celles de l'ordre de 50 Hz, pour lesquelles la réduction observée est de l'ordre de 50 %,

- et d'autre part d'égaliser à une même valeur de fréquence, de l'ordre de 40 Hz, les efficacités maximales d'amortissement du support correspondant respectivement à de "grandes" amplitudes - savoir supérieures à 0,3 mm - et à de "petites" amplitudes - inférieures à 0,3 mm alors qu'en l'absence dudit trou les maxima correspondants à ces différentes amplitudes étaient dispersés sur une gamme de fréquences comprises entre 32 et 38 Hz.

Des valeurs de 2 mm pour le diamètre du trou 8 et de 2 mm pour sa longueur donnent également des résultats favorables pour l'application mentionnée ci-dessus du support d'un moteur à combustion interne.

Les très petites longueurs signalées ci-dessus pour le trou 8 - longueurs plus de dix fois plus petites que la longueur de la "première colonne" 6 - sont dues au fait que ce trou peut être percé dans la portion axiale, relativement mince, du siège annulaire 5₂, qui sépare la première colonne 6, évidée dans ledit siège, de la chambre A ou B dans laquelle débouche ledit trou 8, ainsi que bien visible sur la figure 1.

Au lieu de prévoir un seul petit trou 8 au voisinage d'une extrémité de la colonne principale 6, on peut en prévoir une pluralité, ce qui permet de diversifier les performances d'amortissement du support.

Dans l'exemple de réalisation schématisé sur la figure 2, ces petits trous sont au nombre de deux, désignés respectivement par les références 8₁ et 8₂ et présentant respectivement des petites sections identiques, mais des longueurs différentes, étant percés respectivement entre d'une part une face plane P de l'armature 5₂, perpendiculaire à l'axe de cette armature et située du côté de la chambre A et d'autre part une face étagée et/ou oblique E opposée à ladite face plane P et délimitant en partie le raccord 6₂ qui débouche dans la chambre B.

Au lieu de faire déboucher le trou constituant la seconde colonne dans l'une des extrémités de la première colonne, ce qui revient à monter la seconde colonne en parallèle sur la totalité de la première colonne, on peut aussi faire déboucher ledit trou en un point intermédiaire de la première colonne, ce qui monte ce trou en parallèle sur une partie seulement de ladite première colonne.

Selon une autre variante, on fait comprendre à la seconde colonne deux trous du genre défini au paragraphe précédent, reliant les deux chambres A et B à respectivement deux points confondus ou distincts de la première colonne.

C'est cette dernière hypothèse qui a été illustrée sur la figure 3, pour laquelle les deux trous 8' et 8" relient respectivement deux points M et N de la première colonne à respectivement la chambre A et la chambre B.

La seconde colonne peut alors être considérée comme la totalité du volume liquide contenu successivement dans le trou 8', dans le tronçon MN de la première colonne et dans le trou 8".

Dans chaque cas, les choix de l'emplacement et des cotes des trous délimitant la seconde colonne sont déterminés par la connaissance du rapport entre la longueur et le diamètre (ou la section) de cette seconde colonne, rapport qui est lié à la fréquence et à l'amplitude du phénomène oscillatoire que l'on désire amortir au mieux par la mise en résonance du liquide contenu dans ladite seconde colonne.

En suite de quoi, et quel que soit le mode de réalisation adopté, on dispose finalement d'un support hydraulique antivibratoire dont la constitution et le fonctionnement résultent suffisamment de ce qui précède.

Ce support présente sur ceux antérieurement connus un certain nombre d'avantages et en particulier les suivants:

- il assure un amortissement excellent par résonance ou effet "colonne" de plusieurs phénomènes oscillatoires présentant des fréquences et/ou des amplitudes distinctes: c'est ainsi qu'un support à plusieurs colonnes conforme à l'invention permet d'amortir d'excellente façon, et ce par effet "colonne", aussi bien certaines vibrations à fréquence relativement élevée (telles que celles dues au moteur fonctionnant au ralenti et présentant une fréquence de 25 Hz et une amplitude inférieure à 0,5 mm) que certaines oscillations de hachis (présentant une fréquence de 10 Hz et une amplitude supérieure à 0,5 mm) l'effet "colonne" peut ainsi seconder l'effet antivibratoire assuré précédemment par les vibrations de la cloison déformable:

- le prix de revient du support considéré n'est pas plus élevé que celui des supports comparables comportant une seule colonne vu que les petits trous constitutifs des secondes colonnes sont évidés dans des pièces obtenues par moulage.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Dispositif antivibratoire destiné à être interposé aux fins de support et d'amortissement entre deux éléments rigides et constitué par un boîtier étanche interposé entre les deux éléments rigides, boîtier comportant deux pièces rigides solidarisables respectivement avec les deux éléments rigides, une paroi élastique annulaire de support (3) reliant de façon étanche l'une des deux pièces rigides (2) à une armature annulaire rigide (1) faisant partie de la seconde pièce, une membrane flexible (4) portée de manière étanche par l'armature annulaire, une cloison déformable (5) également portée de manière étanche par l'armature annulaire entre la paroi de support et la membrane flexible et divisant l'intérieur de l'enceinte délimitée par cette paroi et par cette membrane en deux chambres, savoir une chambre de travail (A) du côté de la paroi et une chambre de compensation (B) du côté de la membrane, ces deux chambres communiquant entre elles par un passage étranglé (6), des moyens pour limiter à une amplitude faible, c'est-à-dire inférieure à 1 mm, les déformations de la cloison selon la direction axiale perpendiculaire à son plan moyen, et une masse liquide remplissant les deux chambres ainsi que le passage étranglé, ledit passage étranglé étant constitué par un canal de diamètre et de longueur relativement grands évidé dans l'armature annulaire et s'étendant selon un arc de cercle compris entre 45 et 350° autour de la cloison déformable, les deux extrémités du canal étant terminées par des raccords ($6_1$ et $6_2$) qui débouchent respectivement dans les deux chambres, caractérisé en ce qu'il présente, pour établir la communication entre les deux chambres (A et B), au moins un second passage étranglé constitué par un petit trou (8) reliant l'une des deux chambres (A ou B) à un point du premier passage (6).

2. Dispositif antivibratoire selon la revendication 1, caractérisé en ce que le diamètre du petit trou (8) est relativement faible et compris entre 0,5 et 6 mm, de préférence entre 1 et 4 mm.

3. Dispositif antivibratoire selon l'une quelconque des précédentes revendications, caractérisé en ce que la longueur du petit trou (8) est relativement faible et comprise entre 1 et 10 mm, de préférence entre 2 et 4 mm.

4. Dispositif antivibratoire selon l'une quelconque des précédentes revendications, caractérisé en ce que le point ci-dessus du premier passage (6) se trouve au voisinage de l'extrémité (E), de celui-ci, raccordée à l'autre chambre (B ou A).

5. Dispositif antivibratoire selon l'une quelconque des précédentes revendications, caractérisé en ce que le second passage comprend deux petits trous du genre ci-dessus (8', 8'') reliant respectivement les deux chambres (A et B) à deux points (N et M), distincts ou confondus, du premier passage (6).

**Patentansprüche**

1. Hydraulisches Antischwingungslager, das zur Abstützung und Dämpfung zwischen zwei starren Elementen eingefügt wird und aus folgenden Teilen besteht: einem dichten Gehäuse, das zwischen den starren Elementen eingesetzt ist und zwei starre Teile enthält, die an jeweils einem der beiden starren Elemente anbringbar sind, einer elastischen ringförmigen Stützwandung (3), die eins der starren Teile (2) mit einer starren ringförmigen Armatur (1) verbindet, die ein Teil des zweiten Teils ist, einer flexiblen Membran (4), die dicht von der ringförmigen Armatur (1) gehalten wird, einer deformierbaren Trennwand (5), die ebenfalls dicht durch die ringförmige Armatur zwischen der Stützwandung und der flexiblen Membran gehalten wird und den Innenraum des Gehäuses, der durch die Wandung und die Membran begrenzt wird in zwei Kammern, nämlich eine Arbeitskammer A auf der Seite der Wandung und eine Ausgleichskammer B auf der Seite der Membran unterteilt, wobei die Kammern untereinander über eine enge Durchgangsöffnung (6) in Verbindung stehen, sowie Einrichtungen zur Begrenzung der Deformationen der Trennwand in axialer Richtung senkrecht zur Mittelebene auf eine schwache Amplitude, die kleiner als 1 mm ist und einem flüssigen Medium, das die beiden Kammern sowie die enge Durchgangsöffnung ausfüllt, die aus einem Kanal mit relativ großem Durchmesser und großer Länge besteht, der in der ringförmigen Armatur ausgenommen ist und sich längs eines Kreisbogens zwischen 45 und 350° um die deformierbare Trennwand erstreckt, wobei die beiden Enden des Kanals in Verbindungsstücken ($6_1$, $6_2$) enden, die in die eine bzw. andere Kammer münden, dadurch gekennzeichnet, daß das Lager, um die Verbindung zwischen den beiden Kammern (A und B) herzustellen wenigstens einen zweiten engen Durchgang aufweist, der aus einer kleinen Bohrung (8) besteht, die eine der beiden Kammern (A oder B) mit einer Stelle der ersten Durchgangsöffnung (6) verbindet.

2. Antischwingungslager nach Anspruch 1, dadurch gekennzeichnet, daß der Durchmesser der kleinen Bohrung (8) verhältnismäßig klein ist und zwischen 0,5 und 6 mm, vorzugsweise zwischen 1 und 4 mm liegt.

3. Antischwingungslager nach einem der vorhergehenden Ansprüche, dadurch gekennzeichnet, daß die Länge der kleinen Bohrung (8) verhältnismäßig gering ist und zwischen 1 und 10 mm, vorzugsweise zwischen 2 und 4 mm liegt.

4. Antischwingungslager nach einem der vorhergehenden Ansprüche, dadurch gekennzeichnet, daß die Stelle, an der die Bohrung in die Durchgangsöffnung (6) mündet, in der Nähe des Endes (E) der Öffnung liegt, das mit der anderen Kammer (B oder A) verbunden ist.

5. Antischwingungslager nach einem der vorhergehenden Ansprüche, dadurch gekennzeichnet, daß der zweite Durchgang aus zwei kleinen Bohrungen (8', 8'') besteht, die die beiden Kammern (A bzw. B) an zwei Punkten (M bzw. N) mit der Durchgangsöffnung (6) verbinden, die voneinander getrennt sind oder zusammenfallen.

## Claims

1. Antivibration device designed to be inserted for the purposes of support and damping between two rigid elements and constituted by a fluid-tight housing interposed between the two rigid elements, said housing comprising two rigid parts firmly securable respectively with the two rigid elements, an annular elastic support wall (3) connecting in fluid-tight manner one of the two rigid parts (2) to a rigid annular armature (1) forming part of the second part, a flexible diaphragm (4) borne in fluid-tight manner by the annular armature, a deformable partition (5) also borne in fluid-tight manner by the annular armature between the support wall and the flexible diaphragm and dividing the inside of the enclosure bounded by this wall and by this diaphragm into two chambers, namely a working chamber (A) on the side of the wall and compensation chamber (B) on the side of the diaphragm, these two chambers communicating with each other through a throttled passage (6), means for limiting to a low amplitude, that is to say less than 1 mm, the deformation of the partition in the axial direction perpendicular to its middle plane, and a liquid mass filling the two chambers as well as the throttled passage, said throttled passage being constituted by a channel of relatively large diameter and length hollowed in the annular armature and extending over a circular arc comprised between 45 and 350° around the deformable partition, the two ends of the channel being terminated by connectors ($6_1$ and $6_2$) which open respectively into the two chambers, characterized in that it has, to establish communication between the two chambers (A and B), at least one second throttled passage constituted by a small hole (8) connecting one of the two chambers (A or B) to a point of the first passage (6).

2. Antivibration device according to claim 1, characterized in that the diameter of the small hole (8) is relatively small and comprised between 0.5 and 6 mm, preferably between 1 and 4 mm.

3. Antivibration device according to claim 1, characterized in that the length of the small hole (8) is relatively short and comprised between 1 and 10 mm, preferably between 2 and 4 mm.

4. Antivibration device according to claim 1, characterized in that the above point of the first passage (6) is in the vicinity of the end (E), of the latter, connected to the other chamber (B or A).

5. Antivibration device according to claim 1, characterized in that the second passage comprises two small holes of the above type (8', 8'') connecting respectively the two chambers (A and B) to two separate or merged points (M and N) of the first passage (6).

# FIG.1.

# FIG.2.

# FIG.3.